# EUROPEAN PATENT APPLICATION

(11) **EP 2 072 855 A1**
(43) Date of publication of application: **24.06.2009**
(21) Application number: 07791535.3
(22) Date of filing: 24.07.2007
(51) Int. Cl.: F16F 15/03, B60G 13/08, B60G 17/00, F16F 9/32, F16F 9/50, F16F 15/02, F16H 25/20, F16H 25/24

(54) **SHOCK ABSORBER**

(30) Priority: 11.10.2006 JP 2006277517
(71) Applicant: KAYABA INDUSTRY CO., LTD., Minato-ku Tokyo 105-6111 (JP); Toyota Jidosha Kabushiki Kaisha, Toyota-shi, Aichi 471-8571 (JP)
(72) Inventor: KONDO, Takuhiro, Tokyo 105-6111 (JP); TACHI, Takayuki, Toyota-shi, Aichi 471-8571 (JP)
(74) Representative: Albutt, Anthony John
(86) International application number: PCT/JP2007/064841
(87) International publication number: WO 2008/044384

(57) **Abstract**

A damper (D) comprises a screw shaft (1), a screw nut (4) threadably and rotatably engaged with the screw shaft (1), a motor (M) having a rotor (R) connected to the screw nut (4), and a detent mechanism (5) for making the screw shaft (1) unrotatable. Thus, since the screw shaft (1) is made to perform a linear motion and there is provided the detent mechanism (5) for the screw shaft (1), the outside diameter of the damper (D) can be reduced and hence the on-board characteristic of the damper (D) to a vehicle is improved.

## Description

### FIELD OF ART

The present invention relates to an improvement of a damper.

### BACKGROUND ART

As a damper there is known as such a damper is disclosed in Japanese Patent Laid-Open Publication No. H08 (1996)-197931, which comprises a coil spring as a suspension spring for supporting a vehicle body resiliently, a screw shaft threadably and rotatably engaged with a ball screw nut connected to an axle side, and a motor connected to one end of the screw shaft and also connected to a vehicle body side. With rotating torque generated by the motor, a relative movement between the vehicle body and the axle is controlled actively. Also disclosed therein is a damper having a hydraulic damper disposed in series in the above construction.

### DISCLOSURE OF THE INVENTION

According to the construction of the damper disclosed in the above laid-open publication H08 (1996)-197931 the ball screw nut is made to perform a linear motion vertically by rotating the screw shaft. To implement this construction it is necessary to take a measure for swivel stop of the motor and the ball screw nut although this point is not clearly described in the said laid-open publication.

In the above construction, the ball screw nut is supported by an axle-side member through a tube and is swivel-stopped thereby. However, it is necessary to separately provide a detent member as a swivel stop member for the motor. If the detent member is disposed on the outer periphery of a motor chassis, the outside diameter of the damper increases by that much.

In the above damper there also is adopted a construction wherein a hydraulic damper is disposed in series just above the motor. In such a construction, however, since an inertial mass of a rotating member is large at the time of input of a high-frequency oscillation, and coupled with friction of a rotating system, the motor and a motion converting mechanism cannot perform an expanding/contracting motion, with the result that the motor is oscillated directly by the high-frequency oscillator. Thus, partly because the high-frequency oscillation is high in acceleration, a problem exists in point of reliability of the damper.

In an effort to solve this problem, if the hydraulic damper is disposed on the axle side with respect to the motor, it follows that the tube which supports the ball screw nut is attached to the hydraulic damper. In this case, it is necessary to separately provide a detent member for the ball screw nut.

In case of connecting the tube to a piston rod of the hydraulic damper, the ball screw nut can be swivel-stopped by inhibiting rotation of the rod. However, in the case where a detent member for the rod is provided in a rod guide portion which journals the rod of the hydraulic damper, the section of the rod cannot be made circular and hence not only a hydraulic damper sealing structure becomes complicated but also it becomes difficult to effect sealing. If the detent member is disposed in any other place, the outside diameter of the hydraulic damper will become larger in size and so will become the whole of the device, resulting in that the on-board characteristic of the hydraulic damper to the vehicle is deteriorated.

In case of connecting the tube which supports the ball screw nut to a cylinder, it is necessary to provide a detent member on the outer periphery side of the cylinder. Here again an increase in outside diameter of the hydraulic damper results. Anyhow, the whole of the device becomes larger in size, with consequent deterioration of the on-board characteristic of the damper to the vehicle.

The present invention has been accomplished in view of the above-mentioned problems and it is an object of the invention to reduce the size of a damper which generates a damping force by utilizing torque generated from a motor.

According to the present invention, for achieving the above-mentioned object, in a damper comprising a screw shaft, a screw nut threadably and rotatably engaged with the screw shaft, and a motor having a rotor connected to the screw nut, there is used a detent mechanism for making the screw shaft unrotatable.

According to the damper of the present invention, the screw shaft is made to perform a linear motion and there is provided a detent mechanism around the screw shaft, so that the outside diameter of the shock absorber can be reduced, whereby the on-board characteristic of the damper to the vehicle is improved.

### BRIEF DESCRIPTION OF THE DRAWINGS

FIG. 1 is a longitudinal sectional view of a damper according to an embodiment of the present invention.
FIG. 2 is a perspective view showing a mounted state of a ball screw nut and a ball spline nut onto a screw shaft.

### BEST MODE FOR CARRYING OUT THE INVENTION

The present invention will be described hereunder by way of an embodiment thereof illustrated in the accompanying drawings.

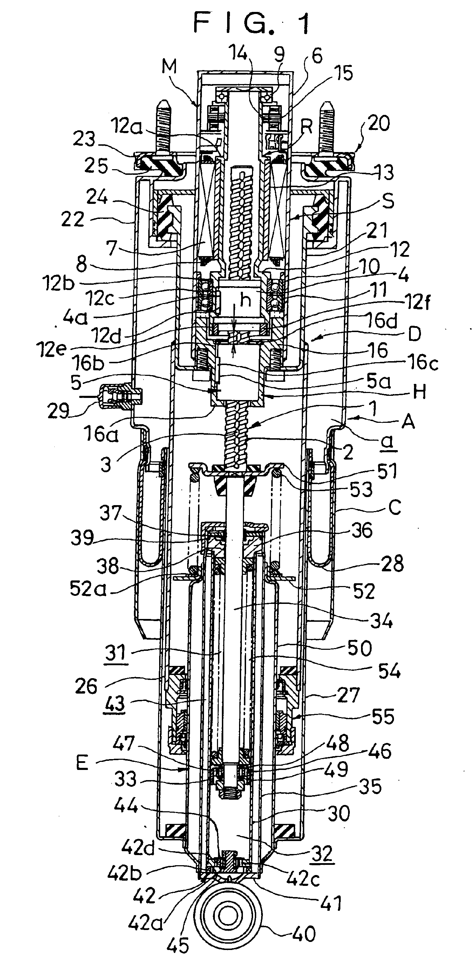

As shown in FIG. 1, a damper D according to an embodiment of the present invention includes a screw shaft 1, a ball screw nut 4 as a screw nut threadably and rotatably engaged with the screw shaft 1, a motor M having a rotor R connected to the ball screw nut 4, and a ball spline nut 5 as a detent, or swivel-stop, mechanism connected unrotatably to a stator S of the motor M.

Basically, in the damper D, the screw shaft 1 is made to perform a linear motion vertically in Fig. 1 by rotating the ball screw nut 4 with torque generated from the motor M. Thus, the damper D can function as an actuator.

When the screw shaft 1 is made to perform a linear motion forcibly with an external force, the rotor R of the motor M performs a rotational motion and the motor M generates torque for suppressing the rotational motion of the rotor R which is caused by an induced electromotive force. Thus, the motor M functions to suppress the linear motion of the screw shaft 1. In this case, the motor M regenerates kinetic energy inputted from the exterior and converts it into electric energy and the linear motion of the linear motion-side member referred to above is suppressed with the regenerated torque.

That is, in the damper D, by causing the motor M to generate torque positively, it is possible to impart thrust to the screw shaft 1. Further, when the screw shaft 1 is made to perform a motion forcibly with an external force, the linear motion of the screw shaft 1 can be suppressed with regenerated torque from the motor M.

Thus, the damper D not only generates a damping force for suppressing the linear motion of the screw shaft 1 but also functions as an actuator, so when the damper D is interposed and used between the vehicle body and the axle, it is for example possible to control the attitude of the vehicle body at the same time. In this way the damper D can function as an active suspension.

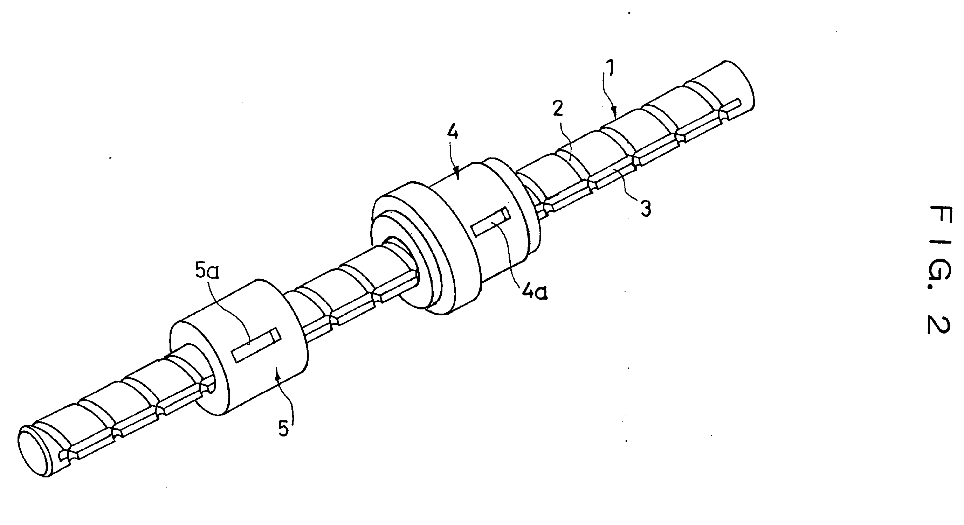

A more detailed description will now be given. As shown in FIGs. 1 and 2, the screw shaft 1 is formed in a cylindrical shape and a spiral screw groove 2 is formed on the outer periphery of the screw shaft 1. Moreover, rectilinear spline grooves 3 are formed along the axis of the screw shaft 1, i.e., in the direction of the linear motion of the screw shaft 1. In order to prevent the screw shaft 1 from coming off the ball spline nut 5 to be described later, the spline grooves 3 may be omitted in both-side terminal ends of the screw shaft 1. The number of the spline grooves 3 to be formed is not specially limited.

The ball screw nut 4 as the screw nut is not illustrated in detail because it is known well. It includes a spiral passage formed in the inner periphery of a tubular body and opposed to the screw groove 2 of the screw shaft 1, a circulation passage formed within the tubular body to provide communication between both ends of the aforesaid spiral passage, plural balls received in the aforesaid spiral passage and circulation passage and adapted to run along the screw groove 2, and spacers interposed between the balls. The balls can circulate through the spiral, or looped, passage and the circulation passage. A key way 4a is formed in a side part of the ball screw nut 4.

The ball spline nut 5 as the detent mechanism is also known well and so is not illustrated in detail, either. Like the ball screw nut 4, the ball spline nut 5 also includes a linear passage formed in the inner periphery of a tubular body and opposed to the spline grooves 3 of the screw shaft 1, a circulation passages formed within the tubular body to provide communication between both ends of the linear passage, plural balls received in the linear passage and the circulation passage and adapted to run along the spline grooves 3, and spacers interposed between the balls. The balls can circulate through the aforesaid looped passage and circulation passage. Further, a key way 5a is formed in a side part of the ball spline nut 5.

The ball screw nut 4 is brought into threaded engagement with the screw shaft 1 along the screw groove 2 and the ball spline nut 5 is fitted on the screw shaft 1 along the spline grooves 3.

On the other hand, as shown in Fig. 1, the motor M is made up of a stator S, the stator S comprising a tubular casing 6, a core 7 as an armature core fixed to the inner periphery of the casing 6 and a coil 8 fitted on the core 7, and a rotor R, the rotor R being held by the casing 6 rotatably through bearings 9, 10 and 11.

The rotor R includes a tubular shaft 12 and a magnet 13 mounted on the outer periphery of the shaft 12 so as to confront the core 7. The shaft 12 is received and held in the casing 6 in a state in which an upper end of the shaft 12 is supported by the inner periphery of the bearing 9 and a lower end thereof is supported by the inner peripheries of the bearings 10 and 11. The magnet 13 is formed by bonding plural magnets in an annular shape so that N and S poles appear alternately along the circumference. An upper end of the magnet 13 is brought into abutment against a flange portion 12a formed on the outer periphery of the shaft 12, thereby securing a bonding area. As the magnet 13 there may be used an annular magnet having a divided pole pattern in which N and S poles appear alternately along the circumference.

Thus, in this embodiment the motor M is constituted as a brushless motor, but as the motor M there may be used any of various other types of motors. For example, there may be used a DC motor, an AC motor, an induction motor, or a synchronous motor.

A resolver core 14 is mounted on the outer periphery of the upper end of the shaft 12 in the rotor R and a resolver stator 15 is mounted within the casing 6 so as to confront the resolver core 14. With the resolver core 14 and the resolver stator 15, it is possible to detect the position of the rotor R. Further, by means of a controller (not shown) for controlling the supply of an electric current to the coil 8, the motor M can be controlled on the basis of the position and rotating speed of the rotor R. The means for detecting the position of the rotor R is not limited to the aforesaid resolver. For example, there may be used a magnetic sensor such as a Hall element, or a rotary encoder.

The ball screw nut 4 is accommodated and fixed inside the lower end of the shaft 12 so that the ball screw nut 4 can be rotated with rotation of the rotor R of the motor M. The screw shaft 1, with which the ball screw nut 4 is engaged threadedly, is; inserted into the shaft 12. More specifically, the portion of the shaft 12 lower than the magnet 13-mounted portion is enlarged in diameter to form an enlarged-diameter portion 12b and the ball screw nut 4 is received within the enlarged-diameter portion 12b. Further, a key 12d is inserted into a key way 12c formed in the inner periphery of the enlarged-diameter portion 12b and also into the key way 4a formed in the ball screw nut 4 to inhibit swivel of both ball screw nut 4 and shaft 12. At the same time, the ball screw nut 4 is fixed to the shaft 12 with an annular nut 12f which is threadedly engaged with a screw portion 12e formed in the inner periphery of a lower end of the enlarged-diameter portion 12b.

Although in the above construction the ball screw nut 4 is attached to the shaft 12 of the rotor R, the ball screw nut 4 itself may be used as a shaft in the rotor R of the motor M and the magnet 13 may be mounted on the outer periphery of the ball screw nut 4. In the concept of connecting the ball screw nut 4 to the rotor R as referred to herein there also is included a construction wherein the ball screw nut 4 itself is made the rotor R.

Further, a holder 16 for holding the outer periphery of the ball spline nut 5 is mounted on the inner periphery side of a lower end of the casing 6, whereby the ball spline nut 5 is connected unrotatably to the stator S of the motor M. More specifically, the holder 16 is formed in a bottomed tube shape whose upper side is enlarged in diameter to form a stepped portion. The outer periphery side of the holder 16 is, for example, press-fitted inside the inner periphery of the casing 6, whereby the holder 16 is fixed to the casing 6. An inwards projecting flange portion 16a is formed on the inner periphery side of a lower end of the holder 16 and a key way 16b is formed in the inner periphery of the holder 16. That the ball spline nut 5 is connected unrotatably to the stator S of the motor M means that it suffices for the ball spline nut 5 to be connected in an unrotatable state to the stator S. Therefore, in this concept there also is included a case where the ball spline nut 5 is connected to the stator S of the motor M indirectly through plural other members in addition to the direct connection of the ball spline nut 5 to the motor stator.

The ball spline nut 5 is accommodated along the inner periphery of the holder 16 and a key 16c is inserted into the key way 5a formed in a side part of the ball spline nut 5 and also into the key way 16b to inhibit swivel of the ball spline nut 5 with respect to the holder 16. Moreover, a snap ring 16d is abutted against an upper end in Fig. 1 of the ball spline nut 5 and is mounted on to the inner periphery of the holder 16. The ball spline nut 5 is sandwiched in between the snap ring 16d and the flange portion 16a and is thereby prevented from falling off from the holder 16.

According to this construction, when the ball screw nut 4 rotates with rotation of the rotor R of the motor M, the screw shaft 1 is inhibited from swivel by the ball spline nut 5 connected to the stator S of the motor M, so that the screw shaft 1 performs a linear motion vertically in FIG. 1. Thus, in the damper D, not only the screw shaft 1 is allowed to perform a linear motion, but also there is provided the detent mechanism for the screw shaft 1, so that the outside diameter of the shock absorber D can be reduced and hence the on-board characteristic of the shock absorber D to the vehicle is improved.

More particularly, since the detent mechanism for the screw shaft 1 is constituted by the ball spline nut 5 which engages the spline groove 3 formed in the outer periphery of the screw shaft 1, the detent mechanism can be easily arranged around the screw shaft 1 and it is possible to prevent an increase in size of the detent mechanism and hence possible to further reduce the outside diameter of the damper D. Consequently, the on-board characteristic of the damper D to the vehicle is further improved.

By disposing the ball screw nut 4 as a drive part for the screw shaft 1 and the ball spline nut 5 as a constituent element of the detent mechanism for the screw shaft 1 close to each other, it is possible to shorten the length of the screw shaft 1 which is positioned in a section h between the ball screw nut 4 and the ball spline nut 5.

The portion of the screw shaft 1 positioned in the section h is a portion which is twisted with rotation of the ball screw nut 4. The shorter the section h is, the shorter the twisted portion.

Since the screw shaft 1 when twisted also functions as a spring element, the longer the twisted section h, the longer the time required for response of the linear motion of the screw shaft 1 to the rotation of the ball screw nut 4. However, as noted above, since the twisted section h of the screw shaft 1 can be shortened by disposing the ball screw nut 4 and the ball spline nut 5 close to each other, the responsivity in case of the damper D functioning as an actuator is improved.

Since the responsivity in case of the damper D functioning as an actuator is improved, the controllability for controlling the vehicle attitude actively is also improved.

That the ball screw nut 4 and the ball spline nut 5 are disposed close to each other means that both are disposed so as not to form any wasteful gap except a minimum required gap between the ball screw nut 4 and the ball spline nut 5, taking into account that members such as a nut 12f and a snap ring 16d both necessary for fixing the ball screw nut 4 and the ball spline nut 5 are to be disposed and that free rotation of the ball screw nut 4 is to be ensured.

Further, the ball screw nut 4 and the ball spline nut 5 are mounted in series on the screw shaft 1, so on the premise that the ball screw nut 4 and the ball spline nut 5 do not fall off from the screw shaft 1, and when the screw shaft 1 is made to perform a linear motion vertically in FIG. 1, the length of the screw shaft 1 corresponding to the distance between an upper end in FIG. 1 of the ball screw nut 4 and a lower end in FIG. 1 of the ball spline nut 5 is a wasteful length not contributing to the stroke of the linear motion of the screw shaft 1. Therefore, as noted above, by disposing the ball screw nut 4 and the ball spline nut 5 close to each other, the distance between the upper end in FIG. 1 of the ball screw nut 4 and the lower end in FIG. 1 of the ball spline nut 5 can be set short. Thus, the screw shaft 1 is prevented from becoming wastefully long, the overall length of the damper D can be made short, the on-board characteristic of the damper D to the vehicle can be further improved, and the weight of the damper D can be reduced.

In the above construction the detent mechanism comprises the ball spline nut 5 engaged with any of the spline grooves 3 formed in the outer periphery of the screw shaft 1 because it is possible to effect a smooth vertical movement of the screw shaft 1, but there may be adopted a construction wherein a mere groove is formed in the outer periphery of the screw shaft 1 along the axis of the same shaft and an engaging member such as a key not inhibiting the vertical movement of the screw shaft 1 is put in engagement in the groove to inhibit swivel of the screw shaft 1. Also in this case it is possible to arrange the detent mechanism around the screw shaft 1, so that it is possible to prevent an increase in size of the detent mechanism and also possible to reduce the outside diameter of the damper D, with consequent improvement of on-board characteristic of the damper D to the vehicle. More specifically, for example, there may be adopted a construction wherein the ball spline nut 5 is omitted, a groove is formed along the axis of the screw shaft 1 in place of the spline grooves 3, and the key 16c is inserted into the groove thus formed, thereby constituting a detent mechanism for the screw shaft 1. Thus, in this construction it is the key 16c that serves as the engaging member.

In such a detent mechanism, by disposing the ball screw nut 4 as a drive part of the screw shaft 1 and the engaging member close to each other, it is possible to shorten the length of the screw shaft 1 which is positioned in the section h between the ball screw nut 4 and the engaging member. Consequently, the responsivity in case of the damper D functioning as an actuator is improved and so is the controllability in case of controlling the vehicle attitude actively. Besides, the screw shaft 1 is prevented from becoming wastefully long, the overall length of the damper D can be shortened, the on-board characteristic of the damper D to the vehicle can be further improved, and the weight of the damper D can be reduced.

The motor M is connected to a mount 20 so that it can be connected to a body-side member of the vehicle. More specifically, the motor M is accommodated within a mount inner tube 21 which is connected to the holder 16. The mount 20 includes the mount inner tube 21, a chamber member 22 being tubular and having a flange on the inner periphery side of its upper end in FIG. 1, the chamber member 22 forming a chamber portion of a gas spring A disposed on the outer periphery side of the damper D, an annular plate 23 connected to the body-side member (not shown) of the vehicle, oscillation isolating rubber 24 which connects the mount inner tube 21 and the chamber member 22 with each other, and oscillation isolating rubber 25 which connects the chamber member 22 and the plate 23 with each other.

The gas spring A functions as a suspension spring interposed between the body-side member and axle-side member in the vehicle. A gas chamber (a) of the gas spring is made up of the chamber member 22 which forms a part of the mount 20, a tubular air piston 27 having a base end joined to the outer periphery of a lower end of a hydraulic damper E to be described later, a diaphragm 28 fixed to a lower end in FIG. 1 of the chamber member 22 and also to an upper end in FIG. 1 of the air piston 27, and a tubular cover C connected to the outer periphery of the lower end of the chamber 22 to prevent outward expansion of the diaphragm 28.

A valve 29 is provided in a side part of the chamber member 22 so that gas can be supplied into or discharged from the gas chamber (a) through the valve 29.

In the damper D, as shown in FIG. 1, a hydraulic damper E is connected in series to a lowermost end of the screw shaft 1. The hydraulic damper E includes a cylinder 30, a piston 33 inserted slidably into the cylinder 30 and defining upper and lower (in FIG. 1) pressure chambers 31, 32 within the cylinder 30, a rod 34 connected at one end thereof to the piston 33, and a reservoir tube 35 which covers the outer periphery side of the cylinder 30.

A detailed description will now be given about the hydraulic damper E. A stepped portion (not shown) formed at a lower portion of an annular head member 36 is fitted in an upper-end opening of the cylinder 30. The head member 36 is fitted inside the reservoir tube 35 and is fixed to the reservoir tube 35 by caulking an upper-end opening of the reservoir tube 35. With the head member 36, the cylinder 30 and the reservoir tube 35 are positioned concentrically.

The rod 34 is inserted on the inner periphery side of the head member 36 and the portion between the head member 36 and the reservoir tube 35 is sealed with a sealing member 39 disposed on the outer periphery side of the head member 36. Further provided are a tubular bearing 38 which is in sliding contact with the outer periphery of the rod 34 disposed on the inner periphery side of the head member 36 and a sealing member 37 which is in sliding contact with the outer periphery of the rod 34 to seal the rod 34 and the head member 36, whereby the reservoir tube 35 and the cylinder 30 are sealed in a liquid-tight manner on their upper end sides.

On the other hand, a lower end in FIG. 1 of the reservoir tube 35 is closed with a bottom member 41 having an eye-shaped bracket 40 able to attach the hydraulic damper E to the axle-side member of the vehicle. A disc-like valve body 42 with flange is fitted in a lower end of the cylinder 30 and is held grippingly by the lower end of the cylinder 30 and the bottom member 41.

The valve body 42 has a recess 42a formed on its lower end side. The recess 42a is in communication through a cutout portion 42b with a reservoir chamber 43 formed in a gap between the cylinder 30 and the reservoir tube 35 and is also put in communication through passages 42c and 42d with the pressure chamber 32 located in a lower position in FIG. 1.

An upper end of the passage 42c is closed with a check valve 44, while a lower end of the other passage 42d is closed with a leaf valve 45.

The piston 33 has passages 46 and 47 for communication between the pressure chambers 31 and 32. A leaf valve 48 for closing an upper end of one of the passages 46 is placed on an upper end of the piston 33 and a leaf valve 49 for closing a lower end of the other passage 47 is also placed on the piston upper end. Thus, with leaf valves 48 and 49, resistance is imparted to the flow of liquid passing through the passages 46 and 47.

Liquid is filled into the pressure chambers 31 and 32 formed in the cylinder 30, while as to the reservoir chamber 43 formed by the gap between the cylinder 30 and the reservoir tube 35, a predetermined amount of liquid is filled and gas is sealed into the same chamber.

Thus, the hydraulic damper E is formed as a so-called double-tube type. Of course, the hydraulic damper E may be formed as a so-called single tube type. As noted above, however, by adopting the construction wherein the hydraulic damper E is formed as a double-tube cylinder and the reservoir is disposed on the outer periphery side of the cylinder, there accrues an advantage that the overall length of the hydraulic damper E can be shortened.

In the hydraulic damper E, when the rod moves downward in FIG. 1 with respect to the cylinder 30, the piston 33 moves downward, causing the pressure chamber 31 to expand and the pressure chamber 32 to contract.

At this time, liquid passes through the passage 46 from the pressure chamber 32 while deflecting the leaf valve 48 and moves to the pressure chamber 31. Further, liquid in an amount corresponding to a rod intrusion volume into the cylinder 30, which becomes surplus within the cylinder 30, passes through the passage 42d while deflecting the leaf valve 45 and moves to the reservoir chamber 43.

The hydraulic damper E generates a damping force matching a pressure loss which occurs when liquid passes through the leaf valves 45 and 48. Conversely, when the rod 34 moves upward in FIG. 1 with respect to the cylinder 30, the piston 33 moves upward, causing the pressure chamber 32 to expand and the pressure chamber 31 to contract.

At this time, liquid passes through the passage 47 from the pressure chamber 31 while deflecting the leaf valve 49 and moves to the pressure chamber 32. Further, liquid in an amount corresponding to the volume of the rod 34 withdrawing from the interior of the cylinder 30, which becomes deficient within the cylinder 30, passes through the passage 42c from the reservoir chamber 43 while deflecting the check valve 44 and moves into the cylinder 30.

In this case, the hydraulic damper E generates a damping force matching a pressure loss which occurs when liquid passes through the leaf valve 49.

The damping force generating elements for generating a damping force in the hydraulic damper E are not limited to the leaf valves 45, 48 and 49. There may be used a throttle valve or any other damping valve insofar as the valve used exhibits a predetermined damping action.

A tube 50 having an outwardly expanding intermediate portion is installed on the outer periphery of the reservoir tube 35. The air piston 27is secured to a lower end of the tube 50. Further, a sealing member 55 is disposed on the inner periphery of a lower end of the outer tube 26 which is attached to the outer periphery of a lower end in FIG. 1 of the mount inner tube 21. The sealing member 55 is in sliding contact with the outer periphery of the tube 50 to provide a seal a space between the tube 50 and the outer tube 26. In this way the internal pressure of the gas chamber (a) of the gas spring A is prevented from acting on the screw shaft 1 covered with the outer tube 26, the sealing member 37 of the damper E and further on the interior of the motor M. Thus, in the damper D, the screw shaft 1 and the hydraulic damper E are received within the outer tube 26 and the air piston 27, and the motor M is received within the mount inner tube 21. In this way the main drive parts of the damper D are isolated from the exterior of the damper, whereby the entry of rain water into the damper D and the contact of scattering stones with the main drive parts are surely prevented. Consequently, the utility of the damper D is improved.

An upper end of the rod 34 is connected to a lower end of the screw shaft 1. As is apparent from the above description, the screw shaft 1 is swivel-stopped by the ball spline nut 5, so also in case of connecting the rod 34 and the screw shaft 1 with each other by mutual threaded engagement, the connection can be done in a simple manner without the need of providing any detent means for them.

More specifically, if parts functioning as an actuator or a damper mainly with use of an electromagnetic force, such as the motor M, ball screw nut 4, ball spline nut 5 and screw shaft 1, are provided as one assembly, while those located on the hydraulic damper E side are provided as another assembly, and both assemblies are then coupled together, it is possible to produce the damper D easily.

Since the screw shaft 1 is swivel-stopped by the ball spline nut 5 as a detent mechanism, any detent means for the screw shaft 1 need not be provided on the hydraulic damper E side. Consequently, it is not necessary to make the rod 34 of the hydraulic damper E unrotatable, nor is it necessary to perform any special machining for the rod 34 and the head member 36 or the bearing 37. Moreover, for sealing the rod 34, the use of a conventional sealing member suffices without the use of any special seal. As a result, the manufacturing cost of the damper D is reduced.

A spring bearing member 51 is interposed between the rod 34 and the screw shaft 1 and a spring 53 is interposed between the spring bearing member 51 and a spring bearing member 52 disposed on an upper end of a stepped portion of the tube 50. The tube 50 may be omitted and the spring bearing member 52 may be provided on the reservoir tube 35.

Further, an annular plate 52a is interposed between the spring bearing member 52 and the spring 53, the annular plate 52a serving as means for permitting circumferential rotation of the spring 53 to the spring bearing member 52. With the annular plate 52a as such permitting means, a rotation-induced torque during extension or contraction of the spring 53 is prevented from being transmitted to the spring bearing member 51, whereby even when coupling the rod 34 and the screw shaft 1 with each other by mutual threaded engagement, uncoupling of the two is prevented. Thus, even if the layout of the spring 53 is made as in the above construction, it is possible to effect connection by threaded engagement of the rod 34 and the screw shaft 1.

Moreover, since the torque from the spring 53 does not act on the spring bearing members 51 and 52 themselves, a larger frictional force than necessary is not developed in the spring bearing members 51 and 52, that is, not only smooth expansion and contraction of the damper D are not obstructed, but also it becomes possible to prevent deterioration of the spring bearing members 51 and 52.

Further, a spring 54 is interposed between the head member 36 and the piston 33, and both springs 53 and 54 are balanced in a compressed state with an initial load imposed thereon. The piston 33 is held in its neutral position by the springs 53 and 54. By the neutral position of the piston 33 is meant a position established by the both springs 53 and 54. This neutral position need not always be a vertically central position in FIG. 1 of the cylinder 30.

The springs 53 and 54 not only function to suppress transmission of a high-frequency oscillation of particularly the axle-side member of the vehicle to the motor M-side, i.e., vehicle body-side, member, but also functions to bring the piston 33 back to a predetermined position with respect to the cylinder 30 of the hydraulic damper E.

That is, such inconveniences as interference of the piston 33 with the cylinder 30 with consequent deterioration of ride comfort on the vehicle and a lowering of reliability of the damper D are eliminated.

In the damper D, the hydraulic damper E is connected in series to the screw shaft 1 which is made to perform a linear motion by the motor M and it is disposed on the axle-side member. Therefore, when a high-frequency oscillation such as oscillation relatively high in acceleration is inputted to the axle-side member in a case where the vehicle runs on a bad road or strikes on a projection of a road surface, the hydraulic damper E absorbs this oscillation energy, and coupled with the oscillation transfer suppressing effect by the biasing means described above, the hydraulic damper E acts so as to make the transmission of oscillation to the screw shaft 1 difficult.

In the damper D, oscillation as a linear motion inputted from the axle-side member is converted to a rotational motion. In this connection, there are provided many rotating members large in inertial mass and the moment of inertia becomes large against a high-frequency oscillation; besides, friction exerts an influence. Consequently, it becomes easier to transmit oscillation of the axle-side member to the vehicle body-side member. However, as noted above, the hydraulic damper E absorbs the said oscillation and the springs 53 and 54 exhibit an oscillation transfer suppressing effect, whereby the transfer of the oscillation to the screw shaft 1 is suppressed. Thus, even in such a case the damper D is advantageous in that the ride comfort on the vehicle is not deteriorated. Moreover, since the direct action of a high-frequency oscillation on the motor M and the ball screw nut 4 is prevented by the hydraulic damper E, the transfer of such a high-frequency oscillation as is particularly large in acceleration to the motor M and the ball screw nut 4 is suppressed. Accordingly, the reliability of the motor M and that of the ball screw nut 4, both being main components of the damper D, are improved, and as a result, it is possible to improve the reliability of the damper D.

According to the above construction, the working environment of the motor M and that of the ball screw nut 4 can be improved and hence it is possible to reduce the cost of the both components.

Besides, according to the above construction, a linear motion of the screw shaft 1 is transmitted to the hydraulic damper E, that is, the motor M, ball screw nut 4 and ball spline nut 5 are connected to the body-side member, so that such a large mass as the mass of the motor M is not included in the mass borne by the springs 53 and 54.

Therefore, even when a high-frequency oscillation acts on the axle-side member, a total mass oscillating between the vehicle body-side member and the axle-side member, which are supported by the springs 53 and 54, can be made small in comparison with the conventional damper wherein the motor M itself is supported by a spring. Also in this point the oscillation of the axle-side member becomes difficult to be transmitted to the vehicle body-side member, whereby it is possible to improve the ride comfort.

Further, as is apparent from the above description, since the motor M itself is not supported by the springs 53 and 54, the layout of wiring of the motor M for example is easy; besides, since a high-frequency oscillation is not directly inputted to the motor M itself, there is no fear of damage to wiring, so that the on-board characteristic of the damper D to the vehicle is improved, thus proving that the damper D is more practical.

The layout of the springs 53 and 54 is not limited to the one described above. The spring 53 may be disposed as desired insofar as it biases the piston 33 in one movable upward direction in FIG. 1, and also as to the spring 54, it may be disposed as desired insofar as it biases the piston 33 in the other movable downward direction in the same figure.

Although in this embodiment the gas spring A is used as the suspension spring, it goes without saying that the spring in question may be changed to a coil spring.

Although an embodiment of the present invention has been described above, it is to be understood that the scope of the present invention is not limited to the one illustrated in the drawings or to the one described in detail above.

### INDUSTRIAL APPLICABILITY

The damper of the present invention is applicable to the vehicular suspension.

## Claims

1. A damper comprising a screw shaft, a screw nut threadably and rotatably engaged with said screw shaft, and a motor having a rotor connected to said screw nut, wherein the improvement further comprising a detent mechanism for making said screw shaft unrotatable.

2. A damper according to claim 1, wherein said detent mechanism is an engaging member inserted into a groove formed in an outer periphery of said screw shaft along the axis of the screw shaft.

3. A damper according to claim 1, wherein said detent mechanism is a ball spline nut connected unrotatably to a stator of said motor, said ball spline nut having a plurality of balls adapted to run through a spline groove formed in an outer periphery of said screw shaft along the axis of the screw shaft.

4. A damper according to claim 3, wherein a ball screw nut and said ball spline nut are disposed close to each other.

5. A damper according to any of claims 1 to 4, wherein a rod of a hydraulic damper is connected to one end of said screw shaft, said hydraulic damper comprising a spring for biasing a piston in one movable direction and a spring for biasing said piston in another movable direction, said piston being located in a neutral position by both said springs.
